# EUROPEAN PATENT SPECIFICATION

(11) **EP 0 319 498 B1**
(45) Date of publication and mention of the grant of the patent: **17.03.1993**
(21) Application number: 88850391.9
(22) Date of filing: 14.11.1988
(51) Int. Cl.: G01P 13/02, G01P 5/14

(54) **A direction indicating device for gas flows having transsonic or supersonic speed**
Richtungsanzeigegerät für Gasströmungen mit einer Geschwindigkeit im Bereich der Schallgeschwindigkeit oder darüber
Dispositif d'indication de la direction d'écoulements d'un gaz à des vitesses transsoniques ou supersoniques

(30) Priority: 16.11.1987 SE 8704494
(43) Date of publication of application: 07.06.1989
(73) Proprietor: VOLVO FLYGMOTOR AB, 461 81 Trollhättan (SE)
(72) Inventor: Andersson, Ronny, S-214 43 Malmö (SE); Anner, Karl-Henrik, S-552 42 Jönköping (SE)
(74) Representative: Delmar, John-Ake

(56) References cited:
- EP-A- 0 229 534
- DE-A- 2 148 287
- GB-A- 603 155
- US-A- 2 493 931
- J. PHYS. E. SCIENT. INSTRUM., vol. 10, no. 8, August 1977, pages 844-846; A.K. RAGHAVA et al.: "A novel arrangement for the measurement of the velocity vector"
- ABOTT and VON DOENHOFF: "Theory of wing sections", 1949, pages 556-557, 654-655, 666-667, Dover Publications Inc., New York, US

## Description

The present invention refers to a direction indicating device for gas flows having transsonic or supersonic speed, particularly in restricted or narrow spaces and comprising a pressure-measuring probe inserted into the gas flow and a mechanism for rotational and sliding adjustments of said probe, with an associated calculation unit, said probe having two pressure pick-up openings at its upstream side arranged in lateral side-by-side relationship and the absence of pressure differential between the openings implying that the probe is aligned in the direction of flow.

For measuring of the direction of a gas flow, a plurality of various measuring principles might be utilized, such as laser devices, piezo-electric film or pressure measurements. As far as very exact direction measuring in very narrow spaces is concerned and particularly at transsonic or supersonic speed, practically only measuring of the pressure is applicable, particularly when it comes to direction measurement in an operating turbine as in the present case. For the direction determination by measuring of the pressure in gas flows, measuring probes of various kinds have been used, such as wedge-like or circularly cylindrical probes, non-symmetrical parallel tubes and the like. Of these, the circular cylinder shape and the wedge shape are the ones which are most commonly used, principally due to the fact that they are relatively simple in manufacture. In a cylindrical measuring probe the two pressure pick-up openings or the measuring holes are located where the pressure gradient along the surface has its maximum, so that greatest possible sensitivity to angular adjustments is obtained.

The wedge-shaped measuring probe can chiefly be used in subsonic flows where the pressure differential increases at a determined distance from the peak of the angle or the nose for decreasing nose angle. On the contrary, the pressure differential decreases with the distance from the nose but when said nose angle is reduced, the holes have to be moved rearwardly from the nose for space reasons. Thus said type of probe implies difficulties as far as the determination of the optimum nose angle is concerned. Furthermore, the problems of a wedge-shaped probe increase in the transition to transonic and supersonic flow. Also in a cylindrical probe problems occur in transsonic and supersonic flows in which the cylindrical shape appears as too blunt and affects the flow too much in all positions.

Since it has been more and more essential to know the real flow conditions within the transsonic and supersonic range which prevail within an operating gas turbine, there is thus a need for a measuring probe having improved shape so as to eliminate the drawbacks of the conventional probes. More closely, the object of the present invention is to provide a probe which can be used within the Mach number range of 0.8-2.0 and which has to be an angularly adjustable so-called zero probe having great direction accuracy of the order of magnitude of about 0.2°. The advantage of a so-called zero probe is that when it is adjusted in exact alignment with the flow, the two pressures which are measured are equal. The measuring will then be independent of the pressure and the flow speed and there is no need for measuring a third pressure. Therefore, the present invention is based on the idea that a probe profile shape is to be found, which does not exhibit the flow drawbacks of the previous probe shapes and which at the same time provides for the housing of the required connection tubes between the pressure pick-up openings and the calculation unit.

It has now turned out that this can be obtained and the feature essentially distinguishing the invention is that the probe has the cross-sectional shape of the front portion of a symmetric wing section of a type codified by the National Advisory Commitee of Aeronautics, NACA, USA, as NACA 66-008, 64-015 and particularly NACA 66-015.

The advantage of utilizing a symmetric wing section of such a codified type is that a smooth relief of the flow is obtained at the leading edge of the probe. Furthermore, a very pronounced pressure differential is obtained also for very small angular mis-alignments of the probe from the proper flow direction, i.e. the desired accuracy of 0.2° might be obtained. Moreover, the profile shape allows that required space within the probe can be obtained for housing the necessary connection tubes beween the pressure pick-up openings and the calculation unit, also when the probe openings are located as close to the leading edge or nose of the profile as desired. Finally, the profile shape also allows that required mechanical strength of the probe can be obtained in spite of its small dimensions when located in an operating gas turbine, e.g. after a rotor or a stator.

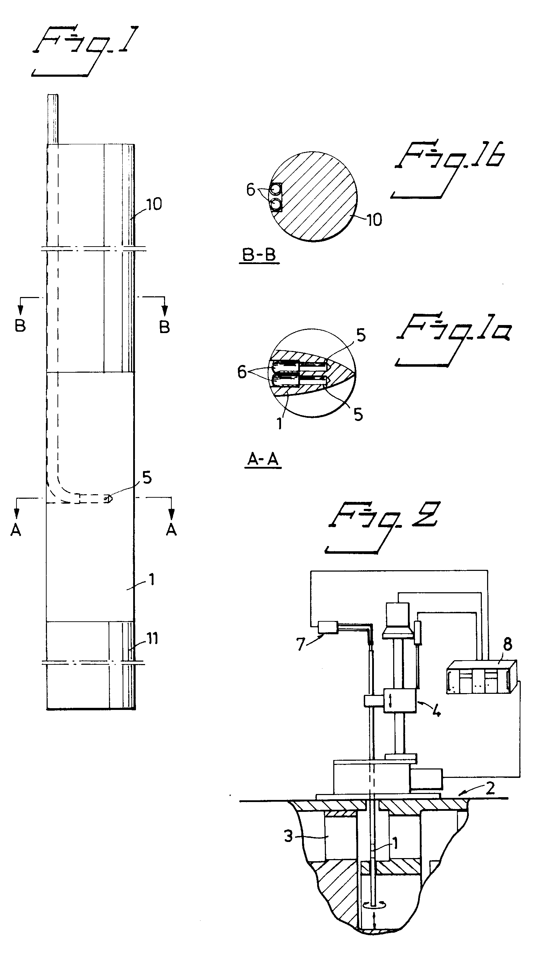

By way of example the invention will be further described below with reference to the accompanying drawing, in which Fig. 1 is a side elevational view of a direction indicating probe according to the invention, Figs 1a and 1b are cross-sections of the probe in Fig. 1 along the lines A-A and B-B, respectively, and Fig. 2 is a fragmentary section of a gas turbine in which is inserted a measuring probe according to the invention with accompanying mechanism for angular and sliding adjustments and a calculation unit.

As particularly evident from Fig. 2 a measuring probe 1 for indicating the direction of gas flowing through a gas turbine is introduced radially into a gas turbine 2 at a position downstream of a turbine wheel or a rotor 3. In order to provide for the measuring of the direction of flow over the whole width of the annular space downstream of the rotor, the measuring probe 1 is arranged radially movable by means of a not further illustrated mechanism 4 externally of the gas turbine for angular and sliding adjustments.

The very probe 1 is constituted by a straight body having a cross-sectional shape, which according to the invention is formed as the forward portion of a symmetric wing section of standard type. Approximately at the middle of the length of said body are located two measuring openings 5 in side-by-side relationship in substantially the same cross-sectional plane and each in one of the opposed profile surfaces facing the flow. Through conduits 6 in the probe said openings are connected with a not further illustrated pressure transmitter 7, which in its turn is connected with a calculation unit 8.

Owing to the selection of a profile shape of the probe 1 corresponding to the front portion of a symmetric wing section of standard type, it is now achieved according to the invention the advantage that the measuring or pressure pick-up openings 5 can be located sufficiently forwardly of the profile, i.e. adjacent the leading edge, in order to provide for a high sensibility, i.e. a pressure differential as great as possible between the two opposite sides of the probe and the openings 5 located therein as soon as the probe 1 is not perfectly aligned with the gas flow but a high pressure side and a low pressure side is formed at the probe 1. Contrary to the previously used wedge-shape of the probe in which the sharp leading edge prevents a flow around the same, a wing section shape according to the invention provides a smooth deflection at the leading edge.

As far as the length of the probe 1 is concerned, i.e. the 'height', there is no particular limitation but since greatest possible pressure differential is to be obtained between the two profile sides of the probe, it is desirable that an overflow as small as possible from the high pressure side to the low pressure side occurs in oblique position of the probe in relation to the gas flow. In a preferred embodiment the profile height therefore has been selected to about three times the profile length, whereby the probe will also be insensible to oblique radial flows and can be ensured good strength characteristics.

As is evident from Fig. 1 the probe 1 is supported by a probe shank 10, which in the present case has cylindrical shape and extends through the outer wall of the gas turbine and connects the probe with the mechanism 4 for angular and sliding adjustments. At the end of the probe 1 remote from the shank 10 said probe preferably also has an elongation 11 for being supported and guided in a portion connected with the housing of the gas turbine 2.

As wing section of standard type it is preferably selected profiles from the NACA series and most preferably one of the following sections, namely NACA 66-008, NACA 64-015 and NACA 66-015. Thereby it is most suitable to select the front one fifth portion of said sections.

By the invention thus is achieved a flow direction indicating probe having a sensibility which is significantly greater than that of previously known probes of cylindrical shape or wedge shape. The probe has turned out to be particularly well suited for transsonic and supersonic flows, also in such qualified applications as in a modern gas turbine, in which the space available to the probe is extremely restricted and of the order of magnitude as small as 4.85 mm, which implies that the probe may not exceed about 3.5 mm. For a constructive point of view, the probe of the suggested shape also provides for such a self-rigidity that it will be sufficient for preventing the probe from being bent or broken by the gas flow in the turbine. However, the probe might also be used advantageously in the subsonic flow range.

The inventive probe shape or section provides for great pressure differentials between the pick-up openings 5 already for small deviations from the exact alignment with the direction of flow of the gases, particularly in connection with the supersonic flows, and thus provides for a great measuring accuracy in a flow speed range which has previously caused serious problems. At the same time, also for small external dimensions of the probe there is sufficient internal space for the necessary conduits to the pressure pick-up openings 5.

## Claims

1. A direction indicating device for gas flows having transonic or supersonic speed, particularly in restricted or narrow spaces and comprising a pressure-measuring probe (1) inserted into the gas flow and a mechanism (4) for rotational and sliding adjustments of said probe, with an associated calculation unit (8), said probe having two pressure pick-up openings (5) at its upstream side arranged in lateral side-by-side relationship and the absence of pressure differential between the openings implying that the probe is aligned in the direction of flow, **characterized in** that the probe (1) has the cross-sectional shape of the front portion of a symmetric wing section of a type codified by the National Advisory Committee of Aeronautics, NACA, USA, as NACA 66-008, 64-015 and particularly NACA 66-015.

2. A device according to claim 1, **characterized in** that the probe (1) has a cross-sectional shape corresponding to the front one fifth of said symmetric wing section.

## Patentansprüche

1. Richtungsanzeigegerät für Gasströmungen mit einer transsonischen oder supersonischen Geschwindigkeit, insbesondere in begrenzten oder engen Räumen und umfassend eine Druckmeßsonde (1), die in die Gasströmung eingesetzt ist, und einen Mechanismus (4) zur Einstellung der Sonde durch Drehen und Verschieben, mit einer mit ihr verbundenen Recheneinheit (8), wobei die Sonde zwei Druckabnehmeröffnungen (5) an ihrer stromaufwärts gerichteten Seite hat, die lateral nebeneinander angeordnet sind, wobei sich aus dem Nichtvorhandensein eines Druckdifferentials zwischen den Öffnungen ergibt, daß die Sonde in der Strömungsrichtung ausgerichtet ist,
**dadurch gekennzeichnet,**
daß die Sonde (1) die Querschnittsform des Vorderabschnittes eines symmetrischen Flügelprofils des Typs hat, der vom National Advisory Committee of Aeronautics, NACA, Vereinigte Staaten von Amerika, als NACA 66-008, 64-015 und insbesondere NACA 66-015 kodifiziert ist.

2. Vorrichtung gemäß Anspruch 1,
**dadurch gekennzeichnet,**
daß die Sonde (1) eine Querschnittsform hat, die dem vorderen Fünftel dieses symmetrischen Flügelprofils entspricht.

## Revendications

1. Un dispositif d'indication de direction pour écoulements de gaz à une vitesse transsonique ou supersonique, en particulier dans des espaces restreints ou étroits, et comportant une sonde (1) de mesure de pression introduite dans l'écoulement de gaz et un mécanisme (4) pour les réglages en rotation et en coulissement de ladite sonde, avec une unité associée(8)de calcul ,ladite sonde présentant deux ouvertures (5) de prélèvement de pression, sur son côté amont, situées côte à côte, et l'absence de différentiel de pression entre les ouvertures impliquant que la sonde est alignée dans la direction d'écoulement, caractérisé en ce que la sonde présente la forme en section droite de la partie avant d'une section d'aile symétrique d'un type codifié par le National Advisory Committee of Aeronautics (Comité National Consultatif pour l'Aéronautique), NACA, Etats-Unis d'Amérique, par NACA 66-008, 64-015 et en particulier NACA 66-015.

2. Un dispositif selon la revendication 1, caractérisé en ce que la sonde (1) présente une forme en section droite correspondant au cinquième avant de ladite section d'aile symétrique.
